# EUROPÄISCHE PATENTANMELDUNG

(11) **EP 3 576 013 A1**
(43) Veröffentlichungstag der Anmeldung: **04.12.2019**
(21) Anmeldenummer: 19174650.2
(22) Anmeldetag: 15.05.2019
(51) Int. Cl.: G06K 9/00

(54) **ABSCHÄTZEN EINES VERLAUFS EINES SCHIENENPFADS**

(30) Priorität: 29.05.2018 DE 102018208481
(71) Anmelder: Siemens Mobility GmbH, 81739 München (DE)
(72) Erfinder: Hartmann, Benjamin, 12489 Berlin (DE); Dyban, Pavlo, 10247 Berlin (DE); Kluckner, Stefan, 12487 Berlin (DE)

(57) **Zusammenfassung**

Es wird ein Verfahren zum Abschätzen eines Verlaufs eines Schienenpfads (SP) beschrieben. Bei dem Verfahren werden Bilddaten (BD) von einem vor einem Schienenfahrzeug (51) liegenden Bereich (B) erfasst. Aus den Bilddaten (BD) werden Bildausschnitte (BA) extrahiert. Weiterhin wird ein faltendes neuronales Netzwerk (CNN) für ein duales Klassifizieren der Bildausschnitte (BA) danach, ob sie einen Schienenabschnitt (SAB) umfassen oder nicht, verwendet. Das faltende neuronale Netzwerk (CNN) wird außerdem für ein Ermitteln von Bildpunktpositionen (BP) auf den Schienenabschnitten (SAB) anhand der entsprechend klassifizierten Bildausschnitte (BA) verwendet. Es wird auch eine Schätzvorrichtung (40) beschrieben. Es wird außerdem ein Schienenfahrzeug (51) beschrieben.

## Beschreibung

Die Erfindung betrifft ein Verfahren zum Abschätzen eines Verlaufs eines Schienenpfads. Weiterhin betrifft die Erfindung eine Abschätzeinrichtung. Überdies betrifft die Erfindung ein Schienenfahrzeug.

Für die Digitalisierung im Bereich von Schienentransportfahrzeugen ist Software zum autonomen Fahren eine Schlüsselanwendung. Ein grundlegendes Element für die Erfassung der Umgebung und ein modellhaftes Planen einer Fahrstrategie für einen Zug besteht in der bildbasierten Streckendetektion. Genauso wie es ein menschlicher Fahrer durchführen muss, muss eine Software zum autonomen Fahren die Schienen mit Hilfe von Kameras erkennen, die auf der Vorderseite des Fahrzeugs angeordnet sind, und Entscheidungen bezüglich der Steuerung des Fahrverhaltens des Zugs unterstützen. Die Schienenerkennung kann zum Beispiel dazu genutzt werden, Hindernisse zu detektieren, Weichen zu erkennen oder zu prüfen und Gleisprüfungen durchzuführen. Die Schienenerkennung anhand von Bildern ist sehr herausfordernd, da viele Umweltbedingungen sich ändern können. Beispielsweise kann sich das Wetter ändern, oder die Position, oder die Beschaffenheit des Gleisbetts. Zwar lassen sich bei Erkennungsverfahren Parameter an eine bestimmte Beschaffenheit der Umwelt anpassen, allerdings müssten dann in unterschiedlichen Gebieten jeweils geeignete Parameterwerte gefunden werden bzw. alternative Kamerakonfigurationen ermittelt werden.

Herkömmliche Ansätze basieren auf klassischer Bildverarbeitung, wie zum Beispiel einer Kantendetektion mit Hilfe eines Sobelfilters, Schwellwertbildung oder Filtern von Konturen. In den meisten Fällen sind solche Verfahren sehr spezifisch auf ein bestimmtes Szenario ausgerichtet, so dass ein sehr großer Aufwand getrieben werden muss, um ein solches Verfahren an neue Bedingungen anzupassen. Diese Arten von spezifischen Vorgehensweisen sind außerdem meist sehr sensitiv gegenüber einer Kamerakalibrierung und Änderungen von Beleuchtungsbedingungen. Es gibt Verfahren, die auf Basis von Lernverfahren angepasst werden. In diesem Zusammenhang sind Computervisionsanwendungen zu nennen, wie zum Beispiel Detektionsverfahren oder Segmentierungsverfahren. Jedoch können mit diesen Verfahren keine spezifischen Merkmale, wie zum Beispiel Kameraparameter, oder perspektivenbezogene Effekte berücksichtigt werden.

Es besteht also die Aufgabe, ein Verfahren und eine Einrichtung anzugeben, mit denen eine Abschätzung eines Schienenverlaufs auch bei variablen Umweltbedingungen ermöglicht wird.

Diese Aufgabe wird durch ein Verfahren zum Abschätzen eines Verlaufs eines Schienenpfads gemäß Patentanspruch 1, eine Schätzvorrichtung gemäß Patentanspruch 13 und ein Schienenfahrzeug gemäß Patentanspruch 14 gelöst.

Bei dem erfindungsgemäßen Verfahren zum Abschätzen eines Verlaufs eines Schienenpfads werden Bilddaten von einem vor einem Schienenfahrzeug liegenden Bereich erfasst. Ein solcher vor dem Schienenfahrzeug liegender Bereich soll einen in Fahrtrichtung vor dem Schienenfahrzeug liegenden Abschnitt umfassen, welcher den Schienenpfad aufweist.

In den Bilddaten werden Bildausschnitte ermittelt. Die Lage der Bildausschnitte kann zum Beispiel in Abhängigkeit davon ermittelt werden, wo in den Bilddaten Schienenabschnitte zu erwarten sind. Zum Beispiel können Bildausschnitte im unteren Bereich des Bildes oder vom linken oder rechten Rand des Bildes als initiale Bildausschnitte genutzt werden, da dort der Beginn eines Schienenpfades zu erwarten ist. Es können auch auf Basis von bereits bekannten Positionen von Schienenabschnitten Bildausschnitte ermittelt werden, in denen eine Fortsetzung der bereits bekannten Schienenabschnitte zu erwarten ist.

Weiterhin wird ein faltendes neuronales Netzwerk dazu angewendet, die Bildausschnitte danach zu klassifizieren, ob sie einen Schienenabschnitt umfassen oder nicht, und Bildpunktpositionen auf den Schienenabschnitten anhand der entsprechend klassifizierten Bildausschnitte zu ermitteln. Das faltende neuronale Netzwerk weist also zwei unterschiedliche Komponenten auf, von denen eine Komponente eine binäre Klassifikation durchführt, welche Auskunft darüber gibt, ob sich ein Schienenabschnitt in dem klassifizierten Bildausschnitt befindet oder nicht. Ein solches faltendes neuronales Netzwerk kann zum Beispiel anhand von Trainingsdaten dazu trainiert werden, die Bildausschnitte korrekt zu klassifizieren. Eine Zuverlässigkeit des trainierten faltenden neuronalen Netzwerks kann zum Beispiel durch den Einsatz von Testdaten vor dem Einsatz im regulären Betrieb getestet werden. Die zweite Komponente des faltenden neuronalen Netzwerks führt eine Art Landmarkendetektion von Bildpunkten in den Bildausschnitten, welche Teil von Schienenabschnitten sind, durch. Anhand der Kenntnis dieser Bildpunkte kann dann der Verlauf der von dem Schienenfahrzeug befahrenen Schienen abgeschätzt werden.

An dieser Stelle soll insbesondere auf die Vorteile von faltenden neuronalen Netzen für autonomes Fahren und Gleiserkennung hingewiesen werden. Die faltenden neuronalen Netze lernen anhand einer Mehrzahl von annotierten Beispieldaten, welche Bildausschnitte eine (oder zwei) Schiene(n) beinhalten und welche nicht. Durch die große Menge von solchen Trainingsdaten wird das Netzwerk im Trainingsschritt dazu gebracht, die typischen bildbasierten Merkmale "zu lernen" bzw. abzuspeichern. Da das faltende neuronale Netz anhand von realen Beispielen mit verschiedenen Wetterbedingungen, Gleisbetten, Beleuchtungswinkeln trainiert wird, lernt es die Merkmale, die für die gleisbeinhaltenden Bildabschnitte unabhängig von den oben genannten externen Einflüssen allgemein sind. Dadurch kann es später Gleisabschnitte in den neuen, vorher ungesehenen Bildausschnitten erkennen. Im Gegensatz zu klassischen Bildverarbeitungsansätzen oder anderen Verfahren des maschinellen Lernens, muss der Entwickler die Merkmale (die so genannten Features) nicht selbst entwerfen, sondern das faltende neuronale Netz lernt diese selbst anhand der bereitgestellten Beispiele. Durch die aus umfangreichen reellen Trainingssätzen erlernten Features mit verschiedenen externen Einflüssen generalisieren die faltenden neuronalen Netze viel besser als andere Verfahren des maschinellen Lernens.

Einen weiteren Vorteil der faltenden neuronalen Netze gegenüber anderen Ansätzen des maschinellen Lernens stellt die Möglichkeit dar, diese mit hoher Effizienz auf GPUs (Graphic Processing Units) auszuführen. Trotz der Menge und der Komplexität der gespeicherten erlernten Informationen lassen sich die faltenden neuronalen Netze mit Echtzeit-Geschwindigkeit ausführen und eignen sich deshalb besonders gut für ADAS-Systeme. Die in der vorliegenden Anmeldung vorgestellten weiteren Performance-Optimierungen (wie z.B. intelligente Suche des Klassifikations-Fensters mit dem Ergebnis aus dem vorherigen Zeitpunkt und der perspektivischen Verzerrung) lassen es zu, die Ausführzeit weiter zu reduzieren. Dadurch ist es erst möglich, den Schienenverlauf mit solch einer hohen Frequenz, die eine hohe Stabilität des Verfahrens und mit menschlicher Wahrnehmung vergleichbare Ergebnisse gewährleistet, zu detektieren und zu verfolgen.

Vorteilhaft kann mit Hilfe des faltenden neuronalen Netzwerks auch sehr flexibel auf Änderungen von Umweltbedingungen, wie zum Beispiel Kalibrationsparameter oder Wetterbedingungen, reagiert werden. Vorteilhaft kann die Bildanalyse und Detektion von Schienenabschnitten auf einen Bereich beschränkt werden, in dem der Schienenpfad zu erwarten ist, so dass die zu verarbeitende Bilddatenmenge reduziert werden kann. Weitere Vorinformationen, wie zum Beispiel Kartenmaterial, können ebenfalls mit einbezogen werden, um den Bildbereich, in dem Bildausschnitte zur weiteren Untersuchung ermittelt werden, einzuschränken. Auf diese Weise lässt sich die zu verarbeitende Bilddatenmenge weiter reduzieren. Vorteilhaft wird dadurch eine erhöhte Bildverarbeitungsrate erreicht, so dass eine Schienenpfaddetektion in Echtzeit ermöglicht wird. Gerade bei der autonomen Steuerung von Schienenfahrzeugen ist eine Auswertung der Bilddaten in Echtzeit gefordert, welche sich durch das erfindungsgemäße Verfahren realisieren lässt.

Die erfindungsgemäße Schätzvorrichtung weist eine Bildaufnahmeeinheit zum Erfassen von Bilddaten von einem vor einem Schienenfahrzeug liegenden Bereich auf. Die erfindungsgemäße Schätzvorrichtung umfasst auch eine Bildausschnitt-Ermittlungseinheit zum Ermitteln von Bildausschnitten in den Bilddaten. Teil der erfindungsgemäßen Schätzvorrichtung ist auch eine Schienendetektionseinheit zum dualen Klassifizieren der Bildausschnitte danach, ob sie einen Schienenabschnitt umfassen oder nicht. Die Schienendetektionseinheit umfasst für die Klassifizierung ein faltendes neuronales Netzwerk. Weiterhin ist die Schienendetektionseinheit auch dazu eingerichtet, Bildpunktpositionen auf den Schienenabschnitten anhand der entsprechend klassifizierten Bildausschnitte zu ermitteln. Die erfindungsgemäße Schätzvorrichtung kann auch eine Schätzeinheit zum Abschätzen eines Verlaufs eines Schienenpfads durch Extrapolation auf Basis der ermittelten Bildpunktpositionen aufweisen. Die erfindungsgemäße Schätzvorrichtung teilt die Vorteile des erfindungsgemäßen Verfahrens zum Abschätzen eines Verlaufs eines Schienenpfads.

Das erfindungsgemäße Schienenfahrzeug weist eine erfindungsgemäße Schätzvorrichtung und eine zumindest teil-autonome Steuereinrichtung zum zumindest teil-autonomen Fahren auf. Das erfindungsgemäße Schienenfahrzeug teilt die Vorteile der erfindungsgemäßen Schätzvorrichtung.

Teile der erfindungsgemäßen Schätzvorrichtung können zum überwiegenden Teil in Form von Softwarekomponenten ausgebildet sein. Dies betrifft insbesondere Teile der Bildausschnitt-Ermittlungseinheit und der Schienendetektionseinheit. Grundsätzlich können diese Komponenten aber auch zum Teil, insbesondere wenn es um besonders schnelle Berechnungen geht, in Form von softwareunterstützter Hardware, beispielsweise FPGAs oder dergleichen, realisiert sein. Ebenso können die benötigten Schnittstellen, beispielsweise wenn es nur um eine Übernahme von Daten aus anderen Softwarekomponenten geht, als Softwareschnittstellen ausgebildet sein. Sie können aber auch als hardwaremäßig aufgebaute Schnittstellen ausgebildet sein, die durch geeignete Software angesteuert werden.

Eine teilweise softwaremäßige Realisierung hat den Vorteil, dass auch schon bisher in Schienenfahrzeugen genutzte Rechnersysteme, die beispielsweise Teil eines autonomen oder teil-autonomen Steuerungssystems sein können, auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung eines solchen Rechnersystems ladbar ist, mit Programmabschnitten, um alle Schritte des Verfahrens zum Abschätzen eines Verlaufs eines Schienenpfads auszuführen, wenn das Computerprogramm in dem Rechnersystem ausgeführt wird.

Ein solches Computerprogrammprodukt kann neben dem Computerprogramm gegebenenfalls zusätzliche Bestandteile, wie z.B. eine Dokumentation und/oder zusätzliche Komponenten, auch Hardware-Komponenten, wie z.B. Hardware-Schlüssel (Dongles etc.) zur Nutzung der Software, umfassen

Zum Transport zur Speichereinrichtung des Rechnersystems und/oder zur Speicherung an dem Rechnersystem kann ein computerlesbares Medium, beispielsweise ein Memorystick, eine Festplatte oder ein sonstiger transportabler oder fest eingebauter Datenträger dienen, auf welchem die von einer Rechnereinheit einlesbaren und ausführbaren Programmabschnitte des Computerprogramms gespeichert sind. Die Rechnereinheit kann z.B. hierzu einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung auch die verschiedenen Merkmale unterschiedlicher Ausführungsbeispiele und Ansprüche auch zu neuen Ausführungsbeispielen kombiniert werden.

In einer bevorzugten Ausgestaltung des erfindungsgemäßen Verfahrens zum Abschätzen eines Verlaufs eines Schienenpfads wird die Größe der Fläche der Bildausschnitte in Abhängigkeit von der Entfernung des Fluchtpunkts gewählt. Vorteilhaft kann die Fläche der Bildausschnitte an eine zu erwartende Größe der Schienenabschnitte angepasst werden. Auf diese Weise lässt sich die Fläche der zu untersuchenden Bilddaten reduzieren, wodurch die Prozessgeschwindigkeit erhöht wird.

In einer Ausgestaltung des erfindungsgemäßen Verfahrens zum Abschätzen eines Verlaufs eines Schienenpfads wird ein größerer Bildausschnitt für einen Bildbereich gewählt, welcher näher zu einer Bildaufnahmeeinrichtung des Schienenfahrzeugs hin liegt, und wird ein kleinerer Bildausschnitt für einen Bildbereich gewählt, welcher weiter entfernt von der Bildaufnahmeeinrichtung des Schienenfahrzeugs liegt. Da die Fläche der Schienenabschnitte mit größerer Entfernung vom Schienenfahrzeug, also näher zum Fluchtpunkt hin, abnimmt, können Bildausschnitte, die näher am Fluchtpunkt liegen, entsprechend kleiner gewählt werden, wodurch wiederum die Menge der zu verarbeitenden Bilddaten reduziert wird und damit die Verarbeitungsgeschwindigkeit erhöht wird.

In einer Ausgestaltung des erfindungsgemäßen Verfahrens zum Abschätzen eines Verlaufs eines Schienenpfads wird die Größe der Fläche der Bildausschnitte in Abhängigkeit von Kalibrierungsparametern der Bildaufnahmeeinrichtung des Schienenfahrzeugs gewählt. Vorteilhaft kann eine Position und eine Orientierung der Bildkamera mitberücksichtigt werden, um einen Bildausschnitt festzulegen. Die genannten Größen haben Einfluss auf die Bildperspektive, welche wiederum entscheidend für die Größe der Flächen der Bildausschnitte ist.

In einer Ausgestaltung des erfindungsgemäßen Verfahrens zum Abschätzen eines Verlaufs eines Schienenpfads wird die Breite der Bildausschnitte größer als eine Spurbreite eines Schienenabschnitts gewählt. Bei dieser vorteilhaften Ausgestaltung kann besonders effizient ein Schienenpaar in einem Durchgang erfasst und lokalisiert werden, wodurch die Verarbeitungsgeschwindigkeit erhöht wird.

In diesem Fall wird dann auch ein Bildausschnitt danach klassifiziert, ob er ein Paar parallel verlaufender Schienenabschnitte umfasst. Auch die Klassifizierung kann auf diese Weise beschleunigt werden, so dass eine Echtzeitverarbeitung der Bilddaten erleichtert wird.

In einer Ausgestaltung des erfindungsgemäßen Verfahrens zum Abschätzen eines Verlaufs eines Schienenpfads werden für das Klassifizieren der Bildausschnitte und das Ermitteln von Bildpunktpositionen jeweils unterschiedliche Arten von Verlustfunktionen verwendet. Vorteilhaft kann eine Verlustfunktion an einen unterschiedlichen Typ der Komponenten der Bilddatenauswertung angepasst werden.

Bevorzugt werden bei dem erfindungsgemäßen Verfahren zum Abschätzen eines Verlaufs eines Schienenpfads die aus den beiden Verlustfunktionen berechneten Verlustwerte in einer gewichteten Summe addiert, um einen Gesamtfehler für den gesamten Optimierungsprozess des dualen Klassifizierens und des Ermittelns der Bildpunktpositionen der Schienenabschnitte zu ermitteln.

Besonders bevorzugt wird bei dem erfindungsgemäßen Verfahren zum Abschätzen eines Verlaufs eines Schienenpfads der Verlauf des Schienenpfads durch Extrapolation auf Basis der ermittelten Bildpunktpositionen der Schienenabschnitte abgeschätzt. Vorteilhaft können die ermittelten Bildpunkte für eine Prognose darüber genutzt werden, wie der Schienenpfad weiterverläuft. D.h., die Kenntnis von Teilmengen der Bildpunktpositionen, die durch das einmalige oder wiederholte Anwenden des faltenden neuronalen Netzwerkes ermittelt werden, dient dazu, den Fortlauf des Schienenpfades besser abschätzen zu können, um dadurch den Bereich bzw. Bildbereich zu verkleinern, auf den das faltende neuronale Netzwerk angewandt wird.

In einer alternativen Variante des erfindungsgemäßen Verfahrens zum Abschätzen eines Verlaufs eines Schienenpfads wird der Verlauf des Schienenpfads unter Anwendung einer geographischen Karte, vorzugsweise einer Offline-Karte, abgeschätzt. Vorteilhaft kann auch hiermit die Größe eines Bereichs, auf den das faltende neuronale Netzwerk angewandt wird, reduziert werden.

In einer besonders vorteilhaften Variante des erfindungsgemäßen Verfahrens zum Abschätzen eines Verlaufs eines Schienenpfads erfolgt eine Ermittlung einer Bildpunktposition eines nächsten Schienenabschnitts in einer Umgebung des abgeschätzten Verlaufs des Schienenpfads. Vorteilhaft kann der bereits abgeschätzte Verlauf des Schienenpfads dazu genutzt werden, einen neuen Bildausschnitt präzise zu platzieren, so dass die Fläche dieses Bildausschnitts entsprechend klein gewählt werden kann. Auf diese Weise kann wiederum die Datenmenge bei der Bilddatenverarbeitung reduziert werden und damit die Echtzeitfähigkeit des Verfahrens verbessert werden. Die genannten Schritte des erfindungsgemäßen Verfahrens können sooft wiederholt werden, bis ein in den erfassten Bilddaten erfasster Schienenpfad vollständig lokalisiert ist.

Die Erfindung wird im Folgenden unter Hinweis auf die beigefügten Figuren anhand von Ausführungsbeispielen noch einmal näher erläutert. Es zeigen:
- FIG 1: ein Flussdiagramm, welches ein Verfahren zum Abschätzen eines Verlaufs eines Schienenpfads gemäß einem Ausführungsbeispiel der Erfindung veranschaulicht,
- FIG 2: eine Darstellung einer perspektivischen Bildaufnahme von einem Schienenpfad.
- FIG 3: ein Flussdiagramm, welches ein Verfahren zum Abschätzen eines Verlaufs eines Schienenpfads gemäß einem zweiten Ausführungsbeispiel der Erfindung veranschaulicht,
- FIG 4: eine schematische Darstellung einer Schätzvorrichtung gemäß einem Ausführungsbeispiel der Erfindung,
- FIG 5: eine schematische Darstellung eines Schienenfahrzeugs gemäß einem Ausführungsbeispiel der Erfindung.

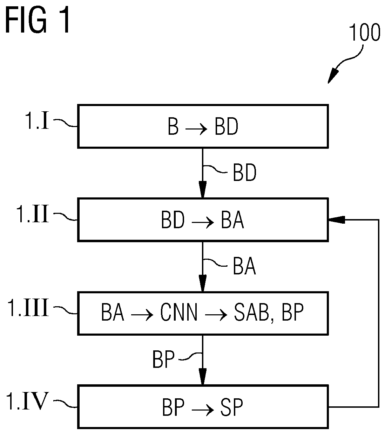

In FIG 1 ist ein Flussdiagramm 100 gezeigt, welches ein Verfahren zum Abschätzen eines Verlaufs eines Schienenpfads gemäß einem Ausführungsbeispiel der Erfindung veranschaulicht.

Bei dem Schritt 1.I werden zunächst von einer an der Vorderfront eines Schienenfahrzeugs angeordneten Bildaufnahmeeinheit Bilddaten BD von einem vor dem Schienenfahrzeug liegenden Bereich B aufgenommen. Dieser Bereich B umfasst auch einen Schienenpfad, auf dem sich das Schienenfahrzeug im weiteren Verlauf seiner Fahrt bewegt.

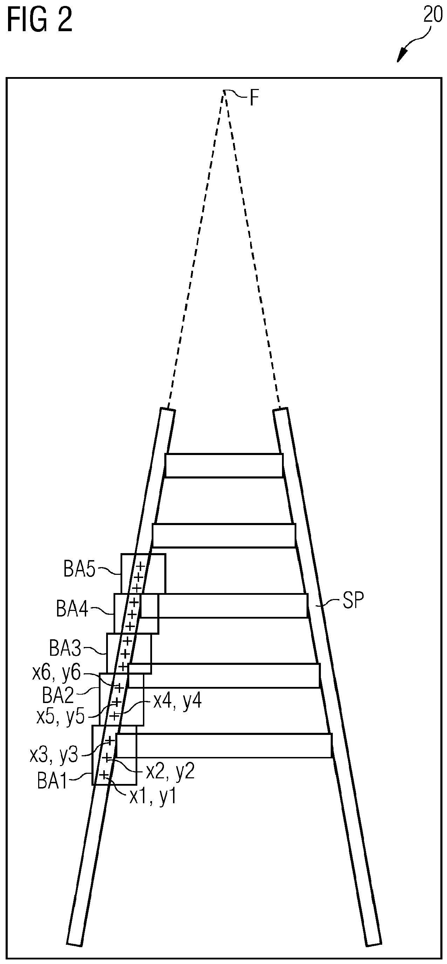

Nachfolgend wird bei dem Schritt 1.II aus den erfassten Bilddaten BD ein Bildausschnitt BA extrahiert, dessen Größe von einer Position des Bildausschnitts BA relativ zu einem Fluchtpunkt der Bilddaten BD und von Kalibrationsparametern der Bildaufnahmeeinheit abhängt. Wie in FIG 2 zu erkennen ist, sind Bildausschnitte BA, welche Teilbereiche wiedergeben, die näher zu der Bildaufnahmeeinheit hin positioniert sind, größer und Bildausschnitte BA, welche Teilbereiche wiedergeben, die weiter weg von der Bildaufnahmeeinheit angeordnet sind, kleiner.

Bei dem Schritt 1.III wird nun ein faltendes neuronales Netzwerk CNN auf den Bildausschnitt BA angewendet, wobei einerseits eine binäre Klassifizierung des Bildausschnitts BA dahingehend durchgeführt wird, ob in dem Bildausschnitt BA ein Schienenabschnitt SAB verläuft, und andererseits wird eine Ermittlung von Positionen BP von Bildpunkten in den Bilddaten BD durchgeführt, welche auf dem Schienenabschnitt SAB liegen.

Bei dem Schritt 1.IV wird auf Basis der ermittelten Positionen BP von Bildpunkten durch Extrapolation auf Basis der ermittelten Positionen BP auf den Schienen ein voraussichtlicher Schienenpfad SP ermittelt. Das Verfahren kann dann fortgesetzt werden, indem zu dem Schritt 1.II zurückgegangen wird, und neue Bildausschnitte BA festgelegt werden, welche auf dem extrapolierten Schienenabschnitt liegen. Die neuen Bildausschnitte BA können nun beträchtlich kleiner ausfallen, da die ungefähre Position des Schienenstrangs SP nun bereits bekannt ist.

In FIG 2 ist eine schematische Darstellung 20 einer perspektivischen Bildaufnahme von einem Schienenpfad SP gezeigt. In der Bildaufnahme ist ein perspektivisch sich zum Fluchtpunkt verjüngender Schienenstrang SP zu erkennen. Bildausschnitte BA1, ..., BA5 beinhalten Teile des Schienenstrangs SP. Mit Hilfe des faltenden neuronalen Netzes werden Bildpunkte x1, y1, ...., x6, y6 von dem Schienenpfad SP ermittelt. Die einzelnen Bildausschnitte BA1, ..., BA5 werden zum Fluchtpunkt F hin aufgrund der perspektivischen Verzerrung immer kleiner.

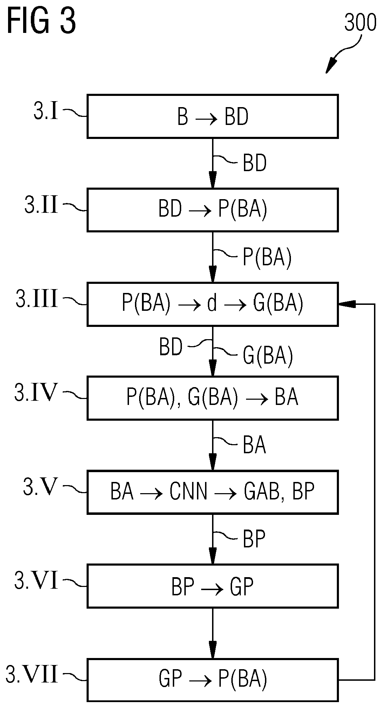

In FIG 3 ist ein Flussdiagramm 300 gezeigt, welches ein Verfahren zum Abschätzen eines Verlaufs eines Schienenpfads gemäß einem zweiten Ausführungsbeispiel der Erfindung veranschaulicht.

Bei dem Schritt 3.I werden zunächst von einer Bildkamera Bilddaten BD von einem vor einem Schienenfahrzeug liegenden Bereich B aufgenommen. Dieser Bereich umfasst auch einen Schienenpfad SP, auf dem sich das Schienenfahrzeug im weiteren Verlauf seiner Fahrt bewegt. Zunächst wird nun bei dem Schritt 3.II ein Bildpunkt P(BA) festgelegt, um den herum ein Bildausschnitt BA extrahiert werden soll. Beispielsweise wird dieser Punkt in einem unteren mittleren Bildbereich festgelegt, weil bekannt ist, dass sich dort Schienen des betreffenden Schienenpfads befinden. Bei dem Schritt 3.III erfolgt dann eine Abstandsbestimmung des Gegenstands des Bildpunkts P(BA) zu der Bildkamera. In Abhängigkeit von dem Abstand d wird nun eine Bildausschnittsgröße G(BA) festgelegt. Die Größe des Bildausschnitts BA wird in diesem Ausführungsbeispiel derart festgelegt, dass ein gesamtes Gleis mit beiden Schienen von dem Bildausschnitt BA umfasst sein kann. Diese Vorgehensweise ist optional. Wie anhand des ersten Ausführungsbeispiels ersichtlich, kann ein Bildausschnitt auch nur einen Gleiskörper umfassen. Die Größenermittlung kann auch von anderen Aspekten als der Frage abhängen, ob ein Gleis oder zwei Gleise simultan detektiert werden sollen. Bei dem Schritt 3.IV wird dann auf Basis der Position P(BA) des Bildausschnitts BA sowie der Größe G(BA) des Bildausschnitts der Bildbereich BA festgelegt. Nun wird bei dem Schritt 3.V auf den Bildausschnitt BA ein faltendes neuronales Netz angewendet, wobei ermittelt wird, ob in dem Bildausschnitt BA ein Gleisabschnitt mit beiden Schienen vorhanden ist. Weiterhin werden mit dem faltenden neuronalen Netz Bildunkte BP auf dem Gleisabschnitt, also beiden Schienen, ermittelt. Auf Basis dieser Bildpunkte BP wird dann bei dem Schritt 3.VI ein Verlauf eines Gleispfads GP abgeschätzt. Bei dem Schritt 3.VII wird dann eine Position eines Bildpunkts BP auf dem abgeschätzten Gleispfad GP ermittelt. Anschließend wird zu dem Schritt 3.III zurückgegangen und es werden mit dem neuen Bildpunkt P(BA) die Verfahrensschritte 3.III bis 3.VII durchgeführt, um zusätzliche Abschnitte des Gleispfads GP abzuschätzen.

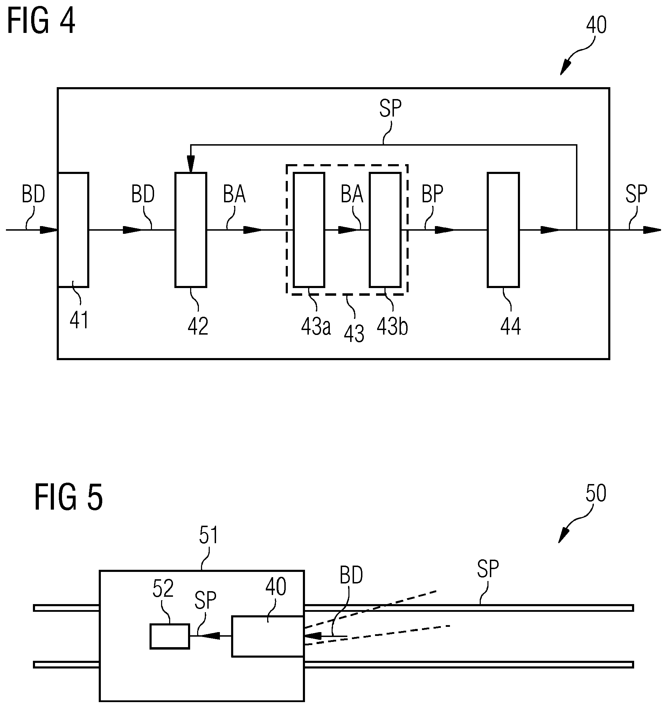

In FIG 4 ist eine Schätzvorrichtung 40 gemäß einem Ausführungsbeispiel der Erfindung schematisch dargestellt. Die Schätzvorrichtung 40 weist eine Bildaufnahmeeinheit 41, eine Bildausschnitt-Ermittlungseinheit 42, eine Schienendetektionseinheit 43 und eine Schätzeinheit 44 auf.

Die Bildaufnahmeeinheit 41 dient zum Erfassen von Bilddaten BD von einem vor einem Schienenfahrzeug 50 (siehe FIG 5) liegenden Bereich B. Die dabei erfassten Bilddaten BD werden an die Bildausschnitt-Ermittlungseinheit 42 übermittelt, welche dazu eingerichtet ist, Bildausschnitte BA in den Bilddaten BD zu ermitteln, wobei die Größe der Fläche der Bildausschnitte BA in Abhängigkeit von der Entfernung des Fluchtpunkts F gewählt wird. Die ermittelten Bildausschnitte BA werden an eine von der Schienendetektionseinheit 43 umfasste Klassifizierungseinheit 43a übermittelt, welche dazu eingerichtet ist, die Bildausschnitte BA danach zu klassifizieren, ob sie einen Schienenabschnitt SAB umfassen oder nicht. Dieser Schritt erfolgt unter Anwendung eines faltenden neuronalen Netzwerks. Teil der Schienendetektionseinheit 43 ist auch eine Ermittlungseinheit 43b, welche Bildpunktpositionen BP von Schienenabschnitten anhand der Bildausschnitte BA, welche von der Klassifizierungseinheit 43a als einen Schienenabschnitt umfassend klassifiziert wurden, ermittelt. Die ermittelten Bildpunktpositionen BP werden an die Schätzeinheit 44 übermittelt, die dazu eingerichtet ist, einen Verlauf SP eines Schienenpfads durch Extrapolation auf Basis der ermittelten Bildpunktpositionen BP zu ermitteln.

In FIG 5 ist ein Szenario 50 gezeigt, wobei ein Schienenfahrzeug 51 gemäß einem Ausführungsbeispiel der Erfindung auf einem Schienenpfad SP unterwegs ist. Das Schienenfahrzeug 51 umfasst eine Schätzvorrichtung 40, wie sie in FIG 4 veranschaulicht ist. Die Schätzvorrichtung 40 erfasst Bilddaten BD von dem Schienenpfad SP und verarbeitet diese auf die in FIG 4 gezeigte Art und Weise. Teil des Schienenfahrzeugs ist auch eine autonome Steuereinrichtung 52, welche die von der Schätzeinrichtung 40 ermittelten Informationen über den Verlauf des Schienenpfads SP empfängt und verarbeitet.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Verfahren zum Abschätzen eines Verlaufs eines Schienenpfads (SP), aufweisend die Schritte:
- Erfassen von Bilddaten (BD) von einem vor einem Schienenfahrzeug (40) liegenden Bereich (B),
- Ermitteln von Bildausschnitten (BA) in den Bilddaten (BD),
- Verwenden eines faltenden neuronalen Netzwerks (CNN) für folgende Schritte:
- duales Klassifizieren der Bildausschnitte (BA) danach, ob sie einen Schienenabschnitt (SAB) umfassen oder nicht,
- Ermitteln von Bildpunktpositionen (BP) auf den Schienenabschnitten (SAB) anhand der entsprechend klassifizierten Bildausschnitte (BA).

2. Verfahren nach Anspruch 1, wobei die Größe der Fläche der Bildausschnitte (BA) in Abhängigkeit von der Entfernung (d) des Fluchtpunkts gewählt wird.

3. Verfahren nach Anspruch 2, wobei ein größerer Bildausschnitt (BA) für einen Bildbereich eines Bilds der erfassten Bilddaten (BD) gewählt wird, welcher näher zu einer Bildaufnahmeeinrichtung (BAE) des Schienenfahrzeugs (40) hin liegt, und ein kleinerer Bildausschnitt (BA) für einen Bildbereich gewählt wird, welcher weiter entfernt von der Bildaufnahmeeinrichtung (BAE) des Schienenfahrzeugs (51) liegt.

4. Verfahren nach einem der vorstehenden Ansprüche, wobei die Größe der Fläche der Bildausschnitte (BA) in Abhängigkeit von Kalibrierungsparametern der Bildaufnahmeeinrichtung (BAE) eines Schienenfahrzeugs (51) gewählt wird.

5. Verfahren nach einem der vorstehenden Ansprüche, wobei die Breite der Bildausschnitte (BA) größer als eine Spurbreite eines Schienenabschnitts (SAB) gewählt wird.

6. Verfahren nach Anspruch 5, wobei ein Bildausschnitt (BA) danach klassifiziert wird, ob er ein Paar parallel verlaufender Schienenabschnitte (SAB) umfasst.

7. Verfahren nach einem der vorstehenden Ansprüche, wobei für den Schritt des Klassifizierens der Bildausschnitte (BA) und den Schritt des Ermittelns von Bildpunktpositionen (BP) jeweils unterschiedliche Arten von Verlustfunktionen verwendet werden.

8. Verfahren nach Anspruch 7, wobei für das Klassifizieren als Verlustfunktion eine binäre Kreuzentropie verwendet wird und für das Ermitteln der Bildpunktpositionen (BP) ein mittlerer quadratischer Fehler verwendet wird.

9. Verfahren nach Anspruch 7 oder 8, wobei die aus den beiden Verlustfunktionen berechneten Verlustwerte in einer gewichteten Summe addiert werden, um einen Gesamtfehler für den gesamten Optimierungsprozess des dualen Klassifizierens und des Ermittelns der Bildpunktpositionen (BP) zu ermitteln.

10. Verfahren nach einem der vorstehenden Ansprüche, wobei der Verlauf des Schienenpfads (SP) durch Extrapolation auf Basis der ermittelten Bildpunktpositionen (BP) abgeschätzt wird.

11. Verfahren nach einem der vorstehenden Ansprüche, wobei der Verlauf des Schienenpfads (SP) unter Anwendung einer geographischen Karte, vorzugsweise einer Offline-Karte, abgeschätzt wird.

12. Verfahren nach Anspruch 10 oder 11, wobei eine Ermittlung einer Bildpunktposition (BP) eines nächsten Schienenabschnitts (SAB) in einer Umgebung des abgeschätzten Verlaufs des Schienenpfads (SP) erfolgt.

13. Schätzvorrichtung (40), aufweisend:
- eine Bildaufnahmeeinheit (41) zum Erfassen von Bilddaten (BD) von einem vor einem Schienenfahrzeug (51) liegenden Bereich (B),
- eine Bildausschnitt-Ermittlungseinheit (42) zum Ermitteln von Bildausschnitten (BA) in den Bilddaten (BD),
- eine Schienendetektionseinheit (43) zum dualen Klassifizieren der Bildausschnitte (BA) danach, ob sie einen Schienenabschnitt (SAB) umfassen oder nicht, unter Anwendung eines faltenden neuronalen Netzwerks (CNN) und zum Ermitteln von geographischen Positionen (BP) auf den Schienenabschnitten (SAB) anhand der entsprechend klassifizierten Bildausschnitte (BA).

14. Schienenfahrzeug (51), aufweisend
- eine Schätzvorrichtung (40) nach Anspruch 13,
- eine zumindest teil-autonome Steuereinrichtung (52) zum zumindest teil-autonomen Fahren.

15. Computerprogrammprodukt mit einem Computerprogramm, welches direkt in eine Speichereinheit einer Steuerungseinrichtung (52) eines Schienenfahrzeugs ladbar ist, mit Programmabschnitten, um alle Schritte eines Verfahrens nach einem der Ansprüche 1 bis 12 auszuführen, wenn das Computerprogramm in der Steuerungseinrichtung (52) ausgeführt wird.

16. Computerlesbares Medium, auf welchem von einer Rechnereinheit ausführbare Programmabschnitte gespeichert sind, um alle Schritte des Verfahrens nach einem der Ansprüche 1 bis 12 auszuführen, wenn die Programmabschnitte von der Rechnereinheit ausgeführt werden.
